# EUROPEAN PATENT SPECIFICATION

(11) **EP 0 719 822 B1**
(45) Date of publication and mention of the grant of the patent: **05.07.2000**
(21) Application number: 94120936.3
(22) Date of filing: 30.12.1994
(51) Int. Cl.: C08K 3/00, C08K 3/34, E02D 31/02

(54) **A bentonite composition extrusile as a flexible strip-like or sheet-like waterproofing product**
Eine Bentonit-Zusammensetzung, extrudierbar als flexibles streifen- oder blattförmiges wasserabweisendes Produkt
Une composition de bentonite extrudable comme un produit flexible hydrophobant sous la forme de bande ou de feuille

(43) Date of publication of application: 03.07.1996
(73) Proprietor: LAVIOSA CHIMICA MINERARIA S.P.A., I-57123 Livorno (IT)
(72) Inventor: Starita, Pietro, I-57100 Livorno (IT); Gasperini, Paolo, I-57125 Livorno (IT)
(74) Representative: Bardini, Marco Luigi

(56) References cited:
- WO-A-94/23137
- DE-C- 805 567
- US-A- 4 514 538
- US-A- 4 534 925
- PATENT ABSTRACTS OF JAPAN vol. 017 no. 430 (M-1460) ,10 August 1993 & JP-A-05 093412 (TACHIBANA MATERIAL:KK) 16 April 1993,

## Description

The present invention relates to the field of waterproofing materials used in the field of building and in civil and industrial engineering. More precisely, the invention relates to a waterproofing composition based on a water swellable smectite clay suited to be formed, in particular by extrusion, for the production of a flexible cord- or strip-like material which can be used in concrete structures and similar applications for example to assure the joint seal in-cold joints of concrete structures, or for the production of flat sheets for use in the field of building.

The use of water swellable smectite clays, such as, in particular, bentonite containing sodium ions as exchangeable cations, is well known for the production of waterproofing panels which are widely used in the field of construction and in civil and industrial engineering. One may refer to, for example, European Patents n. 0059625, n. 0278419, and the published PCT application n. W094/23137 in the name of the same applicant. Said panels are formed by a layer of granulated bentonite, preferably sodium bentonite, with a percentage of silica no lower than 50%, and with a thickness of the layer comprised between 4 and 10 mm. The layer of bentonite is placed between at least two containment layers formed in different materials to give the panel the property of good mechanical resistance on the one hand, and good permeability on the other. These waterproofing panels are used for lining terrain to be used for both civil and industrial dumping, for the isolation of watersheds and artificial basins, for the waterproofing of spaces located under ground level, floors of terraces, etc.

The waterproofing effect is created by the properties of water absorbency and swelling of the bentonite. Bentonite is able to absorb from 3 to 8 times its weight in water, depending on its quality, fineness, percentage of sodium ions among the exchangeable ones and other parameters. When hydrated, the bentonite expands and swells to 10 to 17 times the volume of its normal state (considering the normal state to already have 10-12% humidity), thus forming a compact, waterproof layers without any discontinuity.

From United States Patent n. 4534926, a composition primarily of bentonite is also well known, and can be used to manufacture by extrusion products in the form of cords, sheets and the like, to be used as barriers against the penetration of water through concrete structures, floors, basins and the like. Said composition comprises bentonite and polypropylene and/or polybutylene as well as an elastomer, such as butyl rubber. The resulting extruded product proves sufficiently tacky to be able to adhere to the structure, and is able to be manipulated without significantly reducing the absorbent properties of the clay and, therefore, its ability to swell. The problem which makes the use of the products according to said composition less than practical is the fact that they are difficult to handle and do not have a satisfactory cohesion and are subject to crumbling in the presence of water, for which reason they can become useless if they are not covered immediately by the casting. On the other hand, the use of compacting agents reduces the capacity for absorption of water by the clay by an unacceptable amount, thus reducing its effect. To limit this inconvenience, the commercial product according to United States Patent n. 4534926 is covered by a synthetic containment net.

US Patent No. 4514538 discloses a self-sustaining waterproofing composition for producing flexible articles such as film, sheets, rods comprising at least about 75% of a substantially unswelled bentonite and a film forming formulation including a bentonite dispersant such as dialkylphthalate and a binder such as polyalkylmethacrylate. However, due to the high bentonite content, the product tends to crumble and needs containment means.

The object of the present invention is to provide a wateproofing composition of primarily water swellable smectite clay and suitable to be extruded in the form of a flexible cord- or strip-like material or sheet material having adequate cohesion and depth of compactness for the above-mentioned uses, and which remains unaltered in its capacity for water absorption and swelling.

A further object of the present invention is to provide a sealing strip of primarily water swellable smectite clay able to be easily handled both during storage and installation.

Another object of the present invention is to provide a strip of the above-mentioned type able to swell, but also to conserve its form for a very long period of time, even in the presence of water.

These objects are accomplished by the waterproofing composition according to the present invention the features of which are set forth in the appended claim 1. Thanks to this composition, it is possible to wet the clay to make it mixable, without compromising its capacity for absorption, whereas the binder used, besides giving resistance to the product, also gives it a high degree of flexibility, allowing the strip to be coiled into large rolls.

In particular, as an additive for improving the binding properties of the binder formed by a lower alcohols acrylic esters copolymer a polymer of the acrylic acid can be used.

The smectite clay used in the present composition is preferably sodium bentonite because of its high content of sodium ions from which its swelling properties are derived. Alternatively, activated calcium bentonite can be used in which, that is, calcium ions are substituted for sodium ions, or other types of clay can be used such as hectorite, beidelite, saponite and the like. The particle size of smectite clay used is comprised between 100 and 300 mesh. Since the degree of fineness of the sodium bentonite used influences the swelling, in the preparation of the sealant products according to the present invention, the use of bentonite with a very fine particle size, for example comprised between 200 and 300 mesh is preferred.

Among the polyhydric alcohols that can be used for the purposes of the present invention, glycerine, ethylene glycol and their derivatives and mixtures are preferred. Since these products boil at a temperature higher than water, that is they have a lower vapor pressure, they can maintain the plasticity of the product for a long time without risk of drying during storage.

A copolymer of acrylic esters which can be advantageously used is the commercially known product called Policril® or any equivalent product. This product acts as a binder for the clay material and gives high flexibility to the products. Advantageously it can be added with a polymer of the acrylic acid (for example the product known as Acriflow®, which exhibits similar binding properties).

Various additives, of generally known types, can be added to the composition according to the present invention. Among these, agents suited to increase the viscosity of the water, such as alkyl derivatives of cellulose (carboxymethylcellulose (CMC), ethylcellulose, etc.) are particularly important for the present composition. The increase in the viscosity of the water contained in the composition contributes to the increase in the elasticity and flexibility of the composition necessary for its use.

In the composition according to the present invention, the percentage by weight of the water swellable smectite clay is comprised between 35 and 65% of the total weight dry basis, and preferably between 40 and 60%.

The polyhydric alcohols, in particular glycerine and/or ethylene glycol are preferably contained in a percentage between 10 and 40% by weight dry basis, and preferably between 15 and 30%.

The copolymer of acrylic esters is contained in a percentage comprised between 10 and 45% by weight, and preferably between 30 and 40 dry basis.

The additive binder based on polymers of the acrylic acid is generally contained in a dry basis weight percentage no higher than 20% and preferably no higher than 10%.

The carboxymethylcellulose or equivalent additive suited to increase the viscosity of the water is contained in a percentage by weight no higher than 5% of the dry weight.

The water content of the composition according to the present invention is generally comprised between 10 and 20 % of the dry composition, said water content generally comprising water already present in the clay and dilution water of the binders.

To better illustrate the characteristics of the sealing composition according to the present invention, some of its possible formulas are listed below. For the trials carried out, a sodium bentonite was used having a montmorillonite content greater than 95% and a fineness of 85%<75 microm and the following chemical composition:

| | |
|---|---|
| SiO₂ | = 56.62 |
| Al₂O₃ | = 22.10 |
| TiO | = 0.24 |
| Fe₂O₃ | = 3.42 |
| P₂O₅ | = 0.03 |
| MnO₂ | = 0.08 |
| MgO | = 4.71 |
| CaO | = 1.97 |
| K₂O | = 0.15 |
| Na₂O | = 2.93 |
| P.calc. | = 7.73 |

### Example 1

| | |
|---|---|
| Sodium Bentonite (AK powder, 44µ fineness) | 40% |
| Policril® (dry basis) | 35% |
| Glycerine (at 99%) | 23% |
| CMC | 2% |
| | Total 100% |

As much water as needed, but about 10/15% of the total.

The components are homogenized well, and then the corresponding paste is forced through an extruder with a machine provided with a vacuum device to remove the excess water and form a more compact product.

### Example 2

| | |
|---|---|
| Sodium Bentonite BP 100 in powder | 50% |
| Policril® | 23% |
| Glycerine | 23% |
| CMC | 4% |
| | Total 100% |

As much water as needed, but about 600ml per 3Kg of composition.

Preparation is the same as that of the previous example.

### Example 3

| | |
|---|---|
| Sodium Bentonite BP 100 (fine powder) | 45% |
| Acriflow ®(dry basis) | 15% |
| Policril ®(dry basis) | 20% |
| CMC | 3% |
| Glycerine | 17% |
| | Total 100% |

As much water as needed, but about 400ml per 3Kg of composition.

Preparation is the same as that in the previous examples.

When the composition according to the invention is used to form a cord-like product, the cord formed has a weight of about 700gr per linear meter, and is flexible, plastic and also somewhat elastic. The final humidity varies between 10 and 15%. It can advantageously have a rectangular section of 30 x 15mm and a length varying between 5 and 7m.The cross section of the cord can have also other geometrical shapes according to the working needs, such as triangular equilateral with a side of 35mm or square with a side of 30 mm.

If necessary, the product is subsequently dried for an hour at 70-90°C; this primarily prevents the cord from dissolving in excess water since, with the heating, a partial increase in the degree of polymerization of the resin occurs with a considerable increase in the compactness of the product and also in the resistance to complete penetration by free standing or excess water.

If the product is extruded in the form of a flat sheet, it can be 5-6mm thick and a 1m wide, but obviously these figures can be varied as required. The sodium bentonite content in this product is on the high side percentage level so as to obtain a product with an high density of bentonite particles to give the sheet a very long breackthrough time for liquid penetration.

The product realized with the composition according to the present invention is stabile over time, which signifies that its consistency does not change, no separation takes place between the solid and liquid components, and no evaporation takes place since they have a very low vapor pressure. Furthermore, the clay material contained in it remains completely compact. When the product according to the present invention is placed in contact with water, the clay contained in it develops all its swelling properties as if in the dry state.

In order to evaluate the absorbent properties with regard to water of the sealing product according to the present invention, the following tests have been carried out.
a) Tests of dilatation in water (swelling):
   the products according to the invention, when put in water, exhibit a volume increase of 3-4 times. Their peculiarity is that they do not flake off and that they maintain unchanged their shape without the need of containment nets. Once the products are taken off the water and exposed to the air or to the sun, they recover the original size.
b) Elasticity:
   the products exhibit an elongation due to pull of 10 cm per meter approximately.

## Claims

1. Waterproofing composition suited to be extruded to form flexible cord-like or flat sheet-like products, comprising a water swellable smectite clay, dispersed in an organic liquid consisting of C2-C9 aliphatic polyhydric alcohols or their esters and ethers and a binding agent, characterized in that said smectite clay is contained in a weight percentage comprised between 35 and 65% dry basis and said binding agent comprises a copolymer of acrylic esters of lower alkyl alcohols.

2. Composition according to claim 1, wherein the water swellable smectite clay is sodium bentonite.

3. Composition according to claim 1, wherein said polyhydric alcohols are glycerine and/or ethylene glycol, their derivatives and mixtures.

4. Composition according to claim 1, wherein said polyhydric alcohols are comprised between 10 and 40% by weight dry basis.

5. Composition according to claim 1, wherein said copolymer of acrylic esters of lower alkyl alcohols is comprised between 10 and 45% by weight dry basis.

6. Composition according to claim 5, wherein said copolymer of acrylic ester is comprised between 30 and 40% by weight dry basis.

7. Composition according to claim 1, further comprising a polymer of the acrylic acid in a weight percentage comprised between 0 and 20% dry basis.

8. Composition according to the previous claims comprising also an alkyl derivative of cellulose in a weight percentage no greater than 5% dry basis.

9. Waterproofing cord manufactured with the composition according to any of the previous claims.

10. Waterproofing flat sheet manufactured with the composition according to any of the claims 1 to 8.

11. Method for the manufacture of a waterproofing cord or sheet according to claim 9 and 10, characterized by the fact that it comprises the following steps:
- dispersing said smectite clay with said organic liquid consisting of C2-C9 aliphatic polyhydric alcohols or their esters and ethers;
- adding said binding agent and homogenizing the paste obtained;
- forming said cord or sheet by extrusion under vacuum.

12. Method according to claim 12, wherein the extruded product is subjected to heating at a temperature comprised between 70 and 90°C.

## Patentansprüche

1. Wasserabweisende Stoffzusammensetzung, die zur Bildung flexibler strang- oder folienförmiger Produkte extrudierbar ist und in Wasser quellfähige, in einer organischen Flüssigkeit aus C2-C9 aliphatischen mehrwertigen Alkoholen oder deren Estern und Äthern sowie einem bindenden Wirkstoff dispergierte Bentoniterde enthält, **dadurch gekennzeichnet, dass** die Bentoniterde in einem Gewichtsanteil zwischen 35 und 65% auf Trockenbasis enthalten ist und der bindende Wirkstoff ein Copolymer von Acrylestern von niedrigalkylen Alkoholen enthält.

2. Stoffzusammensetzung nach Anspruch 1, bei der die in Wasser quellfähige Bentoniterde Natriumbentonit ist.

3. Stoffzusammensetzung nach Anspruch 1, bei der die mehrwertigen Alkohole Glyzerin und/oder Ethylenglycol, ihre Derivate oder Mischungen mit diesen sind.

4. Stoffzusammensetzung nach Anspruch 1, bei der der Anteil an Copolymer von Akrylester zwischen 30 und 40 Gew.% auf Trockenbasis beträgt.

5. Stoffzusammensetzung nach Anspruch 1, bei der der Anteil an Copolymer von Akrylestern von niedrigalkylen Alkoholen zwischen 10 und 45 Gew.% auf Trockenbasis beträgt.

6. Stoffzusammensetzung nach Anspruch 5, bei der der Anteil an Copolymer von Akrylestern zwischen 30 und 40 Gew.% auf Trockenbasis beträgt.

7. Stoffzusammensetzung nach Anspruch 1, die weiter ein Polymer der Akrylsäure in einem Anteil von 0 bis 20% auf Trockenbasis enthält.

8. Stoffzusammensetzung nach den vorstehenden Ansprüchen mit zusätzlich einem Alkylderivat von Zellulose in einem Gewichtsanteil von nicht mehr als 5 % auf Trockenbasis.

9. Wasserabweisendes strangförmiges Material, das mit einer Stoffzusammensetzung nach einem beliebigen der vorstehenden Ansprüche.

10. Wasserabweisende Folie, die unter Verwendung einer Stoffzusammensetzung nach einem beliebigen der Ansprüche 1 bis 8 hergestellt worden ist.

11. Verfahren zur Herstellung eines wasserabweisenden Strang- oder Folienmaterials nach Anspruch 9 oder Anspruch 10, das die folgenden Verfahrensschritte einschließt:
- Dispergieren der Bentoniterde in der organischen Flüssigkeit aus C2 - C9 aliphatischen mehrwertigen Alkoholen oder ihren Estern und Äthern;
- Hinzufügen des bindenden Wirkstoffes und Homogenisieren der erhaltenen Paste;
- Bilden des Stranges oder der Folie durch Extrudieren im Vakuum.

12. Verfahren nach Anspruch 11, bei dem das extrudierete Produkt bei einer Temperatur zwischen 70 und 90°C erhitzt wird.

## Revendications

1. Composition imperméabilisante apte à être extrudée pour former des produits flexibles sous forme de cordons ou de feuilles planes, comprenant une argile à smectite gonflable à l'eau, dispersée dans un liquide organique constitué d'alcools polyvalents aliphatiques en C2-C9 ou leurs esters et éthers, et d'un agent liant, caractérisée en ce que l'argile à smectite est contenue dans un pourcentage en masse compris entre 35 et 65% de base sèche, et que ledit agent liant comprend un copolymère d'esters acryliques d'alkylalcools inférieurs.

2. Composition selon la revendication 1, dans laquelle l'argile à smectite gonflable à l'eau est de la bentonite de sodium.

3. Composition selon la revendication 1, dans laquelle lesdits alcools polyvalents sont de la glycérine et/ou du glycol éthylène, leurs dérivés et mélanges.

4. Composition selon la revendication 1, dans laquelle la masse desdits alcools polyvalents est comprise entre 10 et 40% de base sèche.

5. Composition selon la revendication 1, dans laquelle la masse dudit copolymère d'esters acryliques d'alkylalcools inférieurs est comprise entre 10 et 45% de base sèche.

6. Composition selon la revendication 5, dans laquelle la masse dudit copolymère d'esters acryliques est comprise entre 30 et 40% de base sèche.

7. Composition selon la revendication 1, comprenant en outre un polymère d'acide acrylique dans un pourcentage en masse compris entre 0 et 20% de base sèche.

8. Composition selon les revendications précédentes, comprenant aussi un dérivé alkyle de cellulose dans un pourcentage en masse non supérieur à 5% de base sèche.

9. Cordon imperméabilisant réalisé avec la composition selon l'une quelconque des revendications précédentes.

10. Feuille plane imperméabilisante réalisée avec la composition selon l'une quelconque des revendications 1 à 8.

11. Procédé pour réaliser un cordon ou une feuille imperméabilisante selon les revendications 9 et 10, caractérisé par le fait qu'il comprend les étapes suivantes:
- disperser ladite argile à smectite dans ledit liquide organique constitué d'alcools polyvalents aliphatiques en C2-C9 ou leurs esters et éthers,
- ajouter ledit agent liant et homogénéiser la pâte obtenue,
- former ledit cordon ou ladite feuille par extrusion sous vide.

12. Procédé selon la revendication 11, dans lequel le produit extrudé est chauffé à une température comprise entre 70 et 90°C.
